# Europäisches Patentamt

## European Patent Office

## Office européen des brevets

(19)

(11) Veröffentlichungsnummer: **0 157 082**
**B1**

(12) **EUROPÄISCHE PATENTSCHRIFT**

(45) Veröffentlichungstag der Patentschrift:
11.10.89

(21) Anmeldenummer: 85100433.3

(22) Anmeldetag: 17.01.85

(51) Int. Cl.⁴: **B 62 D 49/00**, A 01 D 17/00,
A 01 D 67/00

(54) **Mehrzweck-Schlepperfahrzeug.**

(30) Priorität: 19.01.84 DE 3401660

(43) Veröffentlichungstag der Anmeldung:
09.10.85 Patentblatt 85/41

(45) Bekanntmachung des Hinweises auf die Patenterteilung: 11.10.89 Patentblatt 89/41

(84) Benannte Vertragsstaaten:
AT BE CH FR GB IT LI NL SE

(56) Entgegenhaltungen:
AU-A- 478 672
FR-A- 2 284 506
US-A- 3 811 581
POWER FARMING, Band 43, Oktober 1969, Seiten 51,53, London, GB; "An exercise in design. One man's idea for an integrated tractor-implements system"

(73) Patentinhaber: Holmer, Alfons
Regensburger Strasse 18
D-8301 Eggmühl (DE)

(72) Erfinder: Holmer, Alfons
Regensburger Strasse 18
D-8301 Eggmühl (DE)

(74) Vertreter: Wasmeier, Alfons, Dipl.-Ing. et al
Postfach 382 Greflingerstrasse 7
D-8400 Regensburg (DE)

## Beschreibung

Die Erfindung betrifft ein Mehrzweck-Schlepperfahrzeug nach dem Oberbegriff des Anspruches 1.

In der Landwirtschaft ging seit einiger Zeit der Trend bei den Erntemaschinen in Richtung Selbstfahrer, z. B. für das Roden von Zuckerrüben, das Verladen von Zuckerrüben, das Ernten von Getreide usw., bzw. zu selbständigen, schleppergezogenen Spezialmaschinen wie z. B. Sämaschinen, Spritzgeräten, Maishäckslern, Düngerstreuern. Dieser Trend setzte sich fort in der Forstwirtschaft, aber auch auf anderen Anwendungsgebieten, z. B. werden für den Winterstreu- und Schneeräumbetrieb in der Landwirtschaft zunehmend Spezialmaschinen eingesetzt. Insbesondere Selbstfahrer, die in der Regel für sehr hohe Leistung ausgelegt sind und nur für wenige Großbetriebe und insbes. Lohnunternehmen in Frage kommen, sind außerordentlich kostenintensive Maschinen, die pro Jahr nur für wenige Wochen im Einsatz sind, so daß der Kosten-Nutzungsfaktor sehr gering ist. Da andererseits die Leistung derartiger Selbstfahrer sehr hoch ist und aufgrund dieser hohen Leistung die anfallenden Arbeiten in kürzester Zeit erledigt werden können, hat sich in Ermangelung andersweitiger gangbarer Lösungen die Anwendung derartiger Spezialmaschinen trotzdem durchgesetzt. Aufgrund des hohen Kostendruckes bei landwirtschaftlichen Betrieben besteht der Wunsch, von den Selbstfahrmaschinen auf leistungsstarke Mehrzweck-Schlepperfahrzeuge überzugehen, mit denen eine Vielzahl unterschiedlicher Arbeiten durch einfaches Umrüsten unter Verwendung eines Grundfahrzeuges und unterschiedlicher Anbaugeräte bzw. Aufbauten durchgeführt werden können, so daß das teuere Grundfahrzeug eine hohe Einsatzdauer hat und die einzelnen, für die speziellen Anwendungsfälle bestimmten Anbaugeräte und/oder Aufbauten jeweils nach Bedarf mit dem Grundfahrzeug kombiniert werden können.

Insbesondere tritt bei zahlreichen landwirtschaftlichen Arbeiten, vor allem beim Ernten von Wurzelfrüchten, das Problem auf, daß das geerntete Gut unmittelbar nach dem Ernten auf dem Boden abgelegt wird und in einem weiteren Arbeitsgang von einer getrennten Vorrichtung wieder aufgenommen werden muß, damit es weitertransportiert werden kann. Dies stellt in jedem Fall einen arbeitsintensiven Verfahrensschritt dar, der kosten- und zeitaufwendig ist.

Aus der FR-A-2 284 506 ist ein gattungsgemäßes Mehrzweck-Schlepperfahrzeug bekannt geworden, das ein Grundfahrzeug und eine Reihe von unabhängig voneinander aufnehmbaren und auswechselbaren Anbau- und Aufbauvorrichtungen für unterschiedliche Anwendungszwecke besitzt. Ein derartiges Fahrzeug nimmt einen am vorderen Ende des Fahrzeuges fest angeordneten Fahrerplatz sowie Wechselaufbauten im mittleren und hinteren Bereich des Fahrzeuges auf ; auch ist es für den Anbau von Front- und Heckgeräten ausgebildet. Des weiteren werden Fahrzeugrahmen und die einzelnen Aufbauten miteinander durch Steckverbindungen gekoppelt. Eine zwischen den Rädern von vorne nach hinten verlaufende Fördervorrichtung ist am Fahrzeugrahmen und/oder an den Anbaugeräten befestigt, diese Fördervorrichtungen verlaufen unterhalb der Radachsen des Fahrzeuges und bestehen aus zwei miteinander zusammenwirkenden, hintereinander geschalteten Förderern, welche beide von vorne nach hinten ansteigend angeordnet und über eine Fallstufe voneinander getrennt sind. Bei einem derartigen bekannten Motorfahrzeug ist die Umrüstung von einem Anwendungszweck auf einen anderen relativ kompliziert und aufwendig ; die Dauer für eine derartige Umrüstung bedeutet jedoch einen Stillstand und damit Ausfall des Fahrzeuges und steht im unmittelbaren Zusammenhang mit der vielseitigen Einsetzbarkeit. Ein wesentlicher Nachteil eines derartigen bekannten Motorfahrzeuges besteht ferner darin, daß aufgrund der hohen, erforderlichen Bodenfreiheit Räder mit entsprechend großen Durchmesser gewählt werden müssen.

Demgegenüber ist es Aufgabe der Erfindung, ein Mehrzweck-Schlepperfahrzeug der gattungsgemäßen Art so auszugestalten, daß das Fahrzeug mit extrem kurzen Rüstzeiten auf besonders einfache Weise und ohne Hilfsmittel umrüstbar ist, so daß die beim Umrüsten für den Landwirt auftretenden Probleme so gering wie möglich gehalten werden, und daß das Fahrzeug für den praktischen Betrieb und die Bedienung optimal gestaltet wird, insbesondere unter den Achsen eine hohe Bodenfreiheit besteht, und daß die von dem Fahrzeug aufzunehmenden Aufbauten auf einfache Weise abgesetzt und wieder aufgenommen werden können.

Gemäß der Erfindung wird diese Aufgabe mit den Merkmalen des Kennzeichens des Anspruches 1 gelöst. Weitere Ausgestaltungen der Erfindung sind Gegenstand der Unteransprüche.

Das erfindungsgemäße Mehrzweck-Schlepperfahrzeug zeichnet sich durch eine hohe Bodenfreiheit zwischen den Radachsen und dem Erdboden aus, aufgrund deren es erst möglich ist, eine Abförderung von geerntetem Gut unmittelbar unterhalb des Fahrzeuges vom vorderen zum hinteren Fahrzeugende bzw. über das Fahrzeugende hinaus sicherzustellen, so daß eine seitliche Anbringung eine Fördervorrichtung neben dem Fahrzeug, die in jeder Hinsicht ungünstig ist, entfällt und z. B. Zuckerrüben direkt mit einem frontseitig am Schlepperfahrzeug befestigten Roder gerodet, die Rüben in direkter Linie nach hinten auf die Fördervorrichtung abgegeben, auf dieser Förderstufe, ggfs. unter Zwischenschaltung einer Rübenfallstufe bei einer Zweiteilung der Fördervorrichtung, zum rückwärtigen Fahrzeugende gefördert und dort unmittelbar auf einen auf den Fahrzeugrahmen aufgesetzten Bunker bzw. über einen Elevator dem Bunker aufgegeben werden können. Die hierfür erforderliche Bodenfreiheit beträgt bei einer bevorzugten Ausführungsform der Erfindung etwa 85 cm, was mit konventionellen Schlepperfahrzeugen auch nicht annähernd erreicht werden kann, wenn nicht Räder mit übergroßem Durchmesser mit allen ihren Nachteilen eingesetzt werden.

Das Fahrzeug ist so aufgebaut, daß die Fahrerkabine das äußerste vordere Ende des Fahrzeuges bildet, und daß von der Rückseite der Fahrerkabine bis zum Fahrzeugende der Rahmen des Fahrzeuges als Ladefläche ausgebildet ist, auf der Aufbauten bzw. Aufsätze unterschiedlichster Art aufgenommen werden. Aufgrund der vielseitigen Einsetzbarkeit des Schlepperfahrzeuges nach der Erfindung erhält der Fahrer für die mit dem Fahrzeug zu verrichtenden unterschiedlichsten Arbeiten eine optimale Lage seines Arbeitsplatzes, nämlich am vorderen Fahrzeugende, so daß die Sicht auf den Boden am Fahrzeug sowohl nach vorne als auch seitlich einwandfrei ist ; ferner ist die Fahrerkabine als ganzes, d. h. mit allen Bedienungsgeräten, für den Betrieb des Fahrzeuges um 180° drehbar, damit durch einfaches Umschalten die Fahrerkabine auch im Rückwärtsgang in Fahrtrichtung angeordnet ist. Hierzu wird die Fahrerkabine auf einer Drehplatte angeordnet.

Zur vielseitigen Einsetzbarkeit eines derartigen Fahrzeuges sind die Aufbauten auswechselbar. Derartige variable Aufbauten sind z. B. ein Bunker mit Elevator zur Aufnahme von Erntegut, wie Rüben, Kartoffeln, Mais oder dergl. ein Saatgutbehälter mit nachgeschalteter, am Fahrzeugrahmen befestigter Drillmaschine, ein Düngerbehälter mit nachgeschaltetem, am Fahrzeugrahmen befestigtem Düngerstreuer, ein Flüssigkeitsbehälter, z. B. für Spritzmittel mit nachgeschalteter, am Fahrzeugrahmen befestigter Spritze, ein Streugutbehälter für den Winterdienst mit angebautem Streuer oder dergl.. Die Aufbauten sind so ausgelegt, daß sie schnell und problemlos gegeneinander auf dem Fahrzeug auswechselbar sind, so daß der Landwirt praktisch ohne Werkzeug diesen Wechsel selbst auf einfache Weise vollziehen kann. Hierzu sind auf dem Rahmen und auf den einzelnen Aufbauten miteinander zusammenwirkende Schnellwechselvorrichtungen vorgesehen, die gleichzeitig einen zentrierenden Effekt haben, z. B. kegelförmige Zapfen auf dem Rahmen, die beim Absenken der Aufbauten auf den Rahmen von Gegenaufnahmeelementen an den Aufbauten aufgenommen werden, welche die kegelförmigen Zapfen umschließen und selbsttätig einrasten sowie zum Auswechseln wieder von Hand oder selbsttätig gelöst werden. Es können im Rahmen vorliegender Erfindung aber auch andere Lösungsmöglichkeiten von an sich bekannten Schnellwechselvorrichtungen zur Anwendung kommen. Die Aufbauten sind mit aus- und einklappbaren Stützfüßen versehen, auf denen sie im Ruhezustand stehen. Die Stützen haben eine solche Höhe, daß sie von dem Schlepperfahrzeug zum Aufnehmen unterfahren werden können. Auf dem Rahmen sind unterhalb der Aufbauten Hub- und Senkvorrichtungen befestigt, über die der Aufbau auf die Höhe der Ladefläche abgesenkt werden kann bzw. auf die Höhe angehoben werden kann, bei der das Fahrzeug unter den Aufbau eingefahren werden kann. Für bestimmte Anwendungsfälle wird der Aufbau am Fahrzeugrahmen so festgelegt, daß er kippbar ist, indem die Auflagestelle am hinteren Ende des Fahrzeuges eine Gelenklagerung darstellt, während im vorderen Bereich des Aufbaues die Hub- und Senkvorrichtung so weit ausfahrbar ausgebildet ist, daß die gewünschte Neigung für den Aufbau erzielt werden kann. Die rückwärtigen Lagerstellen sind deshalb hierbei so ausgelegt, daß der Aufbau sowohl parallel zum Fahrzeugrahmen angehoben und abgesenkt als auch gekippt werden kann.

Das Schlepperfahrzeug weist am vorderen und/ oder am hinteren Ende jeweils ein Dreipunktgestänge zur Aufnahme von Anbaugeräten auf, ferner eine Front- und/oder eine Heckzapfwelle zum Antrieb derartiger Anbaugeräte. Solche Anbaugeräte sind beispielsweise ein Rübenrodegerät, ein Kartoffelrodegerät, eine Kreiselegge, ein Maishäcksler, eine Bodenfräse, ein Schneepflug, eine Ladeschaufel oder dergl., wobei die Art des Anbaugerätes und sein Verwendungszweck die Erfindung in keiner Weise beschränken. Bei den Arten von Anbaugeräten, bei denen geerntetes Gut unter dem Fahrzeug nach hinten gefördert wird, ist mit dem Anbaugerät und/ oder mit dem Maschinenrahmen eine Fördervorrichtung, z. B. ein Transportband, ein Siebband oder dergl. abnehmbar befestigt, das unterhalb des Fahrzeuges und unterhalb den Radachsen verläuft und das das geerntete Gut zum Fahrzeugende fördert. Bei einer speziellen Ausführungsform der Erfindung ist diese Fördervorrichtung so ausgebildet, daß sie aus zwei voneinander unabhängigen Förderern besteht, wobei der vordere Förderer an seinem vorderen Ende mit dem Anbaugerät befestigt und an seinem hinteren Ende am Fahrzeugrahmen aufgehängt ist, während der hintere Förderer mit seinem vorderen Ende am Fahrzeugrahmen aufgehängt ist und das hintere Ende entweder mit dem Fahrzeugrahmen oder mit einem Aufbau oder mit einem hinteren Anbaugerät fest verbunden ist. Die beiden Förderer sind von vorne nach hinten ansteigend angeordnet und überlappen sich so, daß das zu fördernde Gut vom Ende des einen Förderers in einer Fallstufe auf den Anfang des zweiten Förderers fällt und dadurch z. B. beim Transportieren von gerodeten Zuckerrüben, Kartoffeln oder dergl. das Erntegut beim Durchlaufen einer solchen Fallstufe gleichzeitig vorgereinigt wird. Das Aufhängen des einen Endes des Förderers am Fahrzeugrahmen ist eine besonders einfache Art der Befestigung, so daß der Einbau oder der Abbau dieser Förderer mit einem Minimum an Zeitaufwand vorgenommen werden kann. Die hierbei verwendeten Förderer können Siebketten, Transportbänder, Vibrationsförderer oder dergl. sein, wie sie für Zwecke des Förderns von landwirtschaftlichen Gütern an sich bekannt sind. Die Übergabe der geernteten Wur-

zelfrüchte von dem Rodegerät auf die Fördervorrichtung erfolgt dabei mit Hilfe von quer zur Einlaufrichtung angeordneten Schneckenförderern, die die gleichmäßig über die gesamte Breite aufgenommenen Wurzelfrüchte nach innen auf die Mitte zu transportieren und dort auf die Fördervorrichtung übergeben. Der Antrieb der Fördervorrichtung bzw. der Einzelförderer erfolgt zentral vom Fahrzeug aus entweder über die Zapfwelle, oder über einen gesonderten Antrieb, der jedoch fahrzeugmotorabhängig arbeitet, oder aber über die Fahrzeugachsen. Die Förder- oder Transportvorrichtung kann jedoch auch so ausgebildet sein, daß sie vollständig am Fahrzeugrahmen heb- und senkbar befestigt angeordnet ist. Die Förderer selbst können als Ketten- (Siebketten-), Band-(Siebband-), Stab-, Vibrations- oder dergl. -Förderer ausgebildet sein.

Die hohe Bodenfreiheit des Fahrzeuges, bedingt durch den hohen Achsstand, der z. B. durch die Verwendung von Portalachsen erreicht wird, ist das Fahrzeug mit Allradantrieb und Allradlenkung außerordentlich manövrierfähig. Es erhält einen relativ kurzen Radstand von ca. 3 m, so daß damit eine ungewöhnliche Beweglichkeit erzielt wird, die beispielsweise beim Einsatz in der Forstwirtschaft, wenn nämlich der Aufbau mit einem Hubkran und einer Ladefläche für Baumstämme versehen ist, dem Fahrzeuglenker gestattet, im Wald einerseits über Baumstümpfe hinwegzufahren und andererseits auf knappsten Raum höheren Hindernissen auszuweichen. Das Fahrzeug ist in gleicher Weise für Vorwärts- wie Rückwärtsfahrt geeignet; dadurch wird der Einsatz des Fahrzeuges noch weiter verbessert, nachdem ein Wenden des Fahrzeuges zur Umkehr der Fahrtrichtung nicht erforderlich ist.

Nachstehend wird die Erfindung in Verbindung mit der Zeichnung anhand von Ausführungsbeispielen erläutert. Es zeigt:

Fig. 1 eine schematische Seitenansicht des Schlepperfahrzeuges nach der Erfindung, teilweise im Schnitt,

Fig. 2 eine Ansicht des Schlepperfahrzeuges nach Fig. 1 im Schnitt längs der Linie I-I,

Fig. 3 eine schematische Darstellung eines auf den Boden absetzbaren Aufbaues,

Fig. 4 eine schematische Darstellung eines kippbaren Aufbaues,

Fig. 5 eine schematische Darstellung der Kraftübertragung,

Fig. 6, 7, 8, 9 jeweils eine schematische Darstellung einer unterschiedlichen Anwendung des Schlepperfahrzeuges.

Das Mehrzweck-Schlepperfahrzeug nach der Erfindung besteht im Prinzip aus einem Grundfahrzeug 1 mit Fahrerkabine 2 am vorderen Ende des Fahrzeugrahmens 3, einem an der Frontseite angeordneten, vor dem Fahrzeug arbeitenden Aufnahmegerät 4, einem im hinteren Teil des Fahrzeuges auf dem Fahrzeugrahmen 3 aufsitzenden Aufbaues 5 und einer das aufgenommene Gut von dem Aufnahmegerät 4 in den rückwärtigen Aufbau 5 übergebende Fördereinrichtung 6. Der Rahmen 3 des Fahrzeuges nimmt den Motor M, das Schaltgetriebe S und das Verteilergetriebe V etwa in der Mitte der Längserstreckung des Rahmens 3 auf. Das Verteilergetriebe ist mit den vier Rädern 7, 8 gekoppelt; das Fahrzeug hat Allradlenkung und Allradantrieb. Am Frontende des Fahrzeuges ist mit dem Fahrzeugrahmen ein genormtes Dreipunktgestänge 9 mit Fronthydraulik mit den beiden Unterlenkern 10, 11 und dem Oberlenker 12 befestigt, über die das Anbaugerät 4 hydraulisch heb- und senkbar angeordnet ist. Ferner wird über die Frontzapfwelle 13 das Anbaugerät 4 angetrieben. Ein entsprechendes Dreipunktgestänge 14 mit Heckhydraulik ist am unteren Ende des Fahrzeugrahmens 3 angebracht, ebenso eine Heckzapfwelle 15. Unmittelbar hinter der Fahrerkabine 2 ist auf der Laderampe 16 des Fahrzeuges 1 der Aufbau 5 mit Hilfe von Schnellwechseleinrichtungen 17, 18 aufgesetzt. Derartige Schnellwechseleinrichtungen können von herkömmlicher Art sein; sie dienen dazu, den Wechselaufbau auf einfache und schnelle Weise aufzusetzen und zu verriegeln sowie zum Absetzen zu öffnen; sie sind so ausgelegt, daß der Wechselaufbau in den auf dem Fahrzeugrahmen starr befestigten Aufnahmeelementen der Schnellwechseleinrichtungen zentriert wird und mit dem Aufsetzen eine Verriegelung bzw. Verrastung erzielt wird, so daß der Aufbau selbsttätig auf der Laderampe des Fahrzeuges arretiert wird. Mit dem Fahrzeugrahmen 3 ist jeweils eine vordere und eine hintere Portalachse 19 als Radachse verbunden, die eine wesentlich größere Bodenfreiheit ergibt als normale Radachsen. Von den Portalachsen 19 wird über Getriebearme 20 der jeweilige Achsstummel 21 der Räder 7, 8 angetrieben. Portalachsen sind im Fahrzeugbau an sich bekannt.

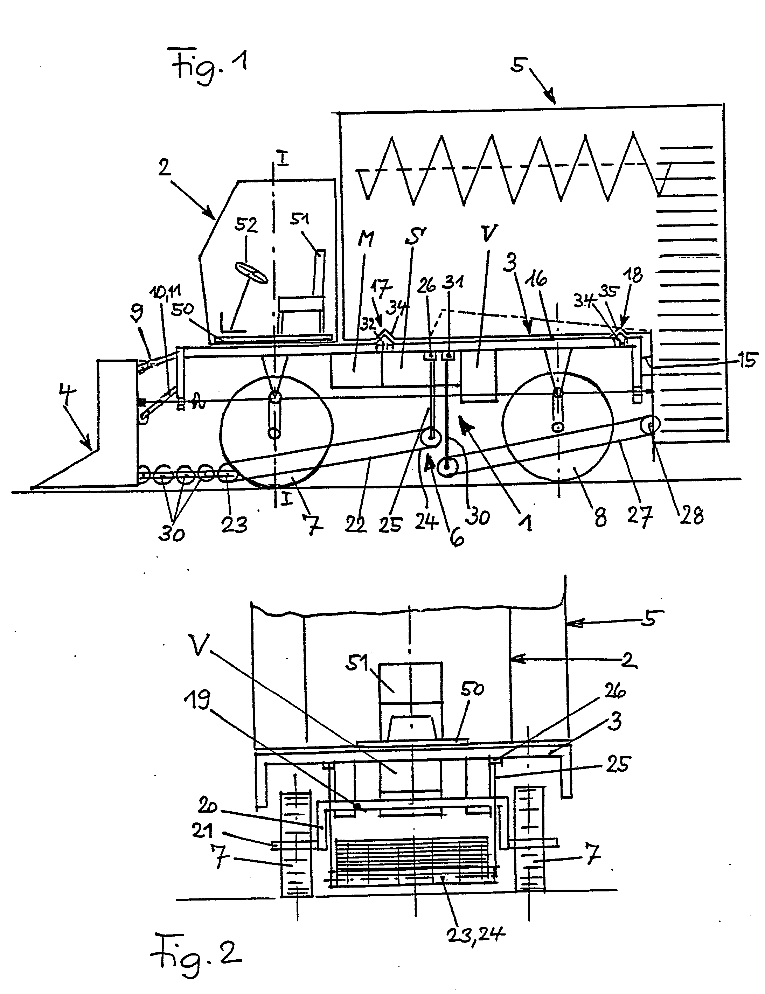

Die Fördervorrichtung 6 unterhalb des Fahrzeugrahmens 3 besteht im Falle der Ausführungsform nach Fig. 1 aus zwei Einzelförderern. Der vordere Förderer 22, der die Form eines Förderbandes, eines Siebbandes, eines Kettenförderers, eines Vibrationsförderers oder dergl. haben kann, ist bei 23 gelenkig an dem Anbaugerät 4 befestigt und an seinem hinteren Ende bei 24 über Ketten bzw. Seile 25 bei 26 am Fahrzeugrahmen 3 aufgehängt. In entsprechender Weise ist der hintere Förderer 27 bei 28 gelenkig mit dem Wechselaufbau 5 befestigt und mit seinem vorderen Ende bei 29 über Ketten bzw. Seile 30 bei 31 am Aufbau 5 (oder am Fahrzeugrahmen 3) aufgehängt. Der hintere Teil 24 des Förderers 22 und der vordere Teil 29 des Förderers 27 sind in eingehängtem Zustand mit einem Höhenabstand voneinander angeordnet, der eine Fallstufe bzw. Reinigungsstufe für das zu fördernde Gut darstellt. Hierzu überlappen sich die beiden Förderer, um eine sichere Übergabe des Gutes zu erzielen. Das Einhängen der Ketten bzw. Seile 25 und 30 am Fahrzeugrahmen 3 läßt sich problemfrei und ohne jedes Werkzeug auf schnellstem Wege erzielen, so daß die beiden Förderer 22 und 27 in kürzester Zeit in den Betriebszustand gebracht werden können. Anstelle einer aus zwei hintereinander geschalteten Einzelförderern bestehenden Fördervorrichtung kann auch ein einziger Förderer eingesetzt werden, der dann keine Fallstufe besitzt und der z. B. am Fahrzeugrahmen 3, insbes. in der Höhe verstellbar, befestigt ist.

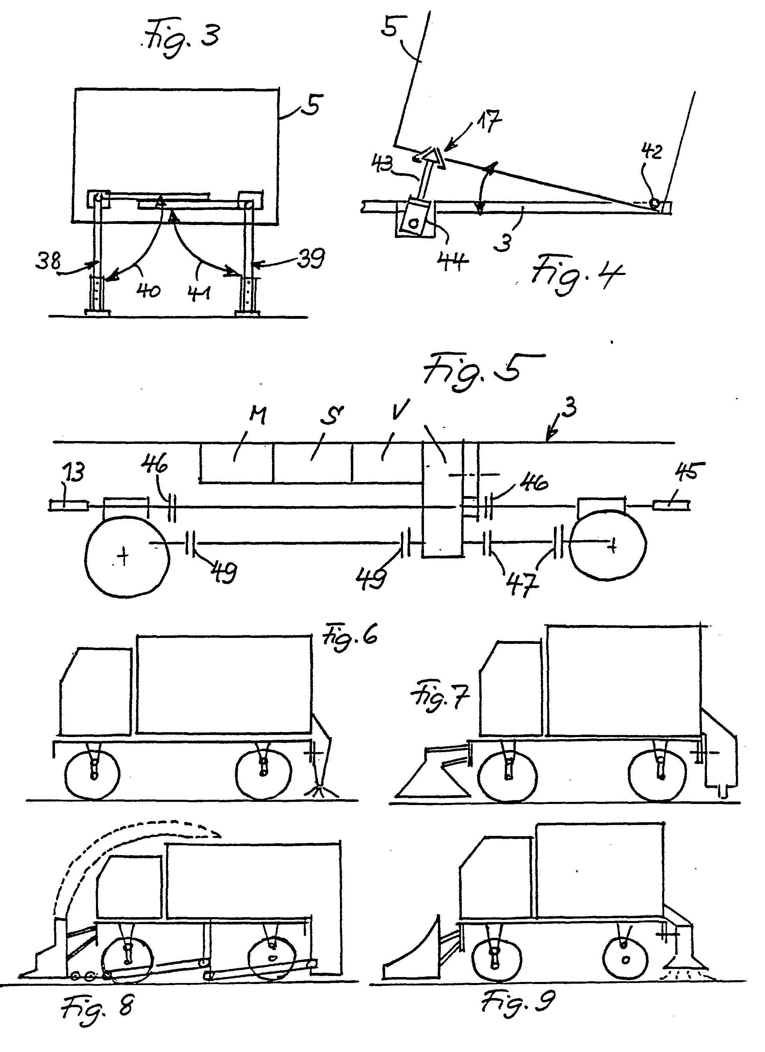

Der Fahrzeugaubau 5 weist in an sich bekannter Weise Stützenpaare 38, 39 auf, die als Träger für den Wechselaufbau im abgestellten Zustand dienen und die einklappbar sind (Pfeile 40, 41 - Fig. 4), wenn der Aufbau auf den Fahrzeugrahmen 3 aufgesetzt worden ist. Bei einer speziellen Ausgestaltung eines Wechselaufbaues nach Fig. 4 ist der Aufbau 5 am Fahrzeugrahmen am linken Ende bei 42 gelenkig gelagert und ist am vorderen Ende bei 43 anhebbar. Die Hubvorrichtung 43 besteht aus am Maschinenrahmen 3 festgelegten Hubzylindern 44, deren Hubarme jeweils Elemente der Schnellwechseleinrichtung 17 aufnehmen ; bei dieser Ausführungsform wird die Hubvorrichtung an der Schnellwechseleinrichtung 18 nicht betätigt.

Die Schnellwechseleinrichtung zum Befestigen der Aufbauten 5 am Fahrzeugrahmen 3 kann mit herkömmlichen, an sich bekannten Mitteln erfolgen. Vorzugsweise sind die Schnellwechseleinrichtungen 17 und 18 in der in Fig. 3 schematisch dargestellten Weise ausgebildet. Bei dieser bevorzugten Ausführungsform sind an den vier Befestigungsstellen auf dem Fahrzeugrahmen 3 pilzförmige Elemente 32, 33 starr befestigt, deren Kopfteil kegelförmig ausgebildet ist. Zur Arretierung dienen mit dem Aufbau 5 an den jeweils vier Befestigungsstellen angebrachte Gegenelemente 34, 35, die aus den Kopf 32, 33 übergreifenden, nach unten offenen Elementen bestehen, die an der Grundfläche nach innen einspringende Vorrichtungen aufweisen, die die Arretierung mit dem Kopf 32, 33 festlegen. Beim Absetzen des Aufbaues 5 rasten die Elemente 34, 35 in die Elemente 32, 33 selbsttätig ein und werden verriegelt. Zum Abstellen des Aufbaues 5 wird diese Verriegelung selbsttätig oder von Hand wieder aufgehoben. Die Elemente 32 und 33, die am Fahrzeugrahmen 3 befestigt sind, weisen jeweils einen Hubzylinder 36, 37 zum Anheben des Aufbaues 5 auf, wenn der Aufbau abgestellt werden soll.

Die Übertragung der Antriebsverbindungen vom Motor M über das Schaltgetriebe S und das Verteilergetriebe V auf die Räder 7, 8 und die Front- sowie Heckzapfwellen 13 und 45 ist schematisch in Fig. 5 dargestellt. Vom Verteilergetriebe V aus werden über entsprechende Übersetzungen und Kupplungen 46, 47 die Hinterräder 8 und die Heckzapfwelle 45 sowie über Kupplungen 48, 49 die Vorderräder 7 und die Frontzapfwelle 13 angetrieben. Wahlweise kann der Antrieb mechanisch oder hydrostatisch, z. B. über Ölmotoren, erfolgen.

Die Fahrerkabine 2 weist eine Drehplatte 50 auf, auf der der Fahrersitz 51 sowie die Lenksäule 52 mit den Bedienungshebeln und -griffen (Kupplung, Bremse, Gangschaltung usw.) angeordnet sind. Die Platte 50 ist um eine Rotationsachse um 180° drehbar angeordnet, so daß bei einer Drehung die Drehplatteneinheit unter Beibehaltung aller Funktionen von Vorwärts- auf Rückwärtsfahrt verstellt werden kann.

Mit den schematischen Darstellungen der Figuren 6, 7, 8 und 9 sind beispielsweise einige weitere Anwendungsmöglichkeiten für den Einsatz des Schlepperfahrzeuges dargestellt. In Fig. 6 ist der Wechselaufbau ein Spritzmittelbehälter und das hintere Anbaugerät eine Spritze zum Ausbringen von flüssigem Spritzmittel ; bei der Anwendung nach Fig. 7 ist der Wechselaufbau ein Saatgutbehälter, das vordere Anbaugerät eine Kreiselegge, die den Boden für das Einbringen des Saatgutes vorbereitet, und das hintere Anbaugerät eine Drillmaschine. Bei der Ausführungsform nach Fig. 8 ist das vordere Anbaugerät ein Maishäcksler, der das gehäckselte Gut in einen den Wechselaufbau darstellenden Bunker fördert. Das gehäckselte Gut kann dabei über einen äußeren Förderkanal in den Bunker geblasen oder über die unterhalb des Fahrzeugrahmens angeordnete Fördervorrichtung von unten über einen Elevator in den Bunker eingebracht werden. Zu diesem Zweck kann die Fördervorrichtung vom Häcksler weg kanalförmig verkleidet sein. Als weitere Einsatzmöglichkeit ist in Fig. 9 der Wintereinsatz schematisch dargestellt. Der Wechselaufbau ist ein Streugutbehälter, das vordere Anbaugerät ein Schneepflug oder ein Schneefräse, und das hintere Anbaugerät ein Streugutverteiler. Anstelle eines Schneepfluges kann auch eine Schneeschaufel verwendet werden, die den aufgenommenen Schnee in einen den Wechselaufbau darstellenden Bunker überführt. Weitere, nicht dargestellte Anwendungsmöglichkeiten des Schlepperfahrzeuges sind der Einsatz in der Forstwirtschaft, wozu dieses Fahrzeug aufgrund der hohen Bodenfreiheit besonders geeignet ist. In diesem Falle ist der Wechselaufbau ein Aufbau zur Aufnahme von Baumstämmen. Zu diesem Zweck erhält das Fahrzeug Hubgreifer für die Aufnahme der Baumstämme. Die Einsatzmöglichkeiten des Fahrzeuges in Verbindung mit Spezial-Wechselaufbauten und Spezial-Anbaugeräten sind durch die angegebenen Beispiele in keiner Weise beschränkt.

**Patentansprüche**

1. Mehrzweck-Schlepperfahrzeug, insbes. für die Land- und Forstwirtschaft, mit einem Grundfahrzeug und mit einer Reihe von unabhängig voneinander aufnehmbaren und auswechselbaren Anbau- und Abbauvorrichtungen (4, 5) für unterschiedliche Arbeitsvorgänge, mit Heck- und Fronthydraulik (14, 9) sowie Heck- und Frontzapfwelle (15, 13), mit einer Fahrzeugrahmen (3), der die Fahrerkabine (2) im vorderen Bereich, Wechselaufbauten (5) im mittleren und hinteren Bereich sowie Front-und Heckanbaugeräte (4) aufnimmt, und mit einer unterhalb der Radachsen (19) des Fahrzeuges zwischen den Rädern (7) angeordneten Fördervorrichtung (22, 27), gekennzeichnet durch die Kombination folgender, an sich bekannter Merkmale :

a) die Fahrerkabine (2) ist unmittelbar am vorderen Ende des Fahrzeugrahmens (3) angebracht, so ausgebildet, daß sie volle Sicht auf die Frontanbaugeräte (4) ergibt, und ist auf einer Drehplatte (50) um 180° drehbar auf dem Fahrzeugrahmens befestigt,

b) zum Festlegen der Aufbauten (5) sind Schnellwechseleinrichtungen (17, 18) vorgesehen, die von Hand oder vom Fahrersitz aus festlegbare Verriegelungen (32, 33, 34, 35) zwischen Aufbauten und Fahrzeugrahmen ergeben,

c) die Radachsen (19) sind zur Erzielung einer hohen Bodenfreiheit als Portalachsen ausgebildet,

d) die unterhalb der Portalachsen (19) angeordneten Fördervorrichtungen (22, 27) sind am Fahrzeugrahmen (3) bzw. an den Aufbauten (5) aufgehängt und damit stabil und auf einfache Weise verstellbar angeordnet,

e) der Fahrzeugaufbau (5) weist Stützen (38, 39) auf, die im abgestellten Zustand als Träger für den Wechselaufbau dienen und die bei auf den Fahrzeugrahmen (3) aufgesetztem Aufbau (5) einklappbar sind.

2. Fahrzeug nach Anspruch 1, dadurch gekennzeichnet, daß die Fördervorrichtung (22, 27) unterhalb des Fahrzeuges aus zwei miteinander zusammenwirkenden und hintereinander geschalteten Förderern (22 und 27) besteht, die beide nach hinten ansteigend angeordnet sind und die über eine Fallstufe voneinander getrennt sind.

3. Fahrzeug nach Anspruch 2, dadurch gekennzeichnet, daß der erste Förderer (22) an seinem Vorderende mit einem Anbaugerät (4) gelenkig befestigt und an seinem hinteren Ende am Maschinenrahmen (3) verstellbar aufgehängt ist, daß der zweite Förderer (27) mit seinem Vorderende am Maschinenrahmen (3) verstellbar aufgehängt ist und mit seinem hinteren Ende am vom Maschinenrahmen aufgenommenen Aufbau (5) oder am Maschinenrahmen (3) oder am hinteren Anbaugerät gelenkig befestigt ist, und daß die Übergabe zwischen Anbau- bzw. Erntegerät und Fördervorrichtung mit Hilfe einer zwischengeschalteten Übergabevorrichtung zum Zusammenführen des geernteten Rübenstromes erfolgt.

4. Fahrzeug nach Anspruch 3, dadurch gekennzeichnet, daß die Übergabevorrichtung in Form von gegenläufigen, zur Mitte fördernden Schneckenwalzen, in Form eines Siebsternes oder dergl. ausgebildet ist.

5. Fahrzeug nach einem der Ansprüche 1-4, dadurch gekennzeichnet, daßdas Anbaugerät (4) ein Erntegerät für Wurzelfrüchte, Körnerfrüchte oder Halmfrüchte ist.

6. Fahrzeug nach einem der Ansprüche 1-5, dadurch gekennzeichnet, daß das Anbaugerät (4) ein Schneepflug bzw. eine Schneefräse ist.

7. Fahrzeug nach einem der Ansprüche 1-6, dadurch gekennzeichnet, daß das Anbaugerät (4) eine Ladeschaufel ist.

8. Fahrzeug nach einem der Ansprüche 1-5, dadurch gekennzeichnet, daß der Wechselaufbau (5) ein Erntegutbunker mit Elevator ist.

9. Fahrzeug nach einem der Ansprüche 1-5, dadurch gekennzeichnet, daß der Wechselaufbau (5) ein Saatgutbehälter ist und daß eine dem Saatgutbehälter zugeordnete Sämaschine von dem Heck-Dreipunktgestänge (14) aufgenommen ist sowie von der Heckzapfwelle (15) angetrieben ist.

10. Fahrzeug nach einem der Ansprüche 1-5, dadurch gekennzeichnet, daß der Wechselaufbau ein Streumittelbehälter ist, dem eine Streuvorrichtung zugeordnet ist, die von dem Heck-Dreipunktgestänge (14) aufgenommen und von der Heckzapfwelle (15) angetrieben ist.

11. Fahrzeug nach einem der Ansprüche 1-5, dadurch gekennzeichnet, daß der Wechselaufbau (5) ein Flüssigkeitsfaß, z. B. für Unkrautspritzmittel ist, und daß das Heck-Dreipunktgestänge (14) eine Spritze aufnimmt, die von der Heckzapfwelle (15) oder der Fahrzeughydraulik angetrieben ist.

12. Fahrzeug nach einem der Ansprüche 1-5, dadurch gekennzeichnet, daß der Wechselaufbau (5) ein Aufnahmebehälter für gehäckselte Erntefrucht, z. B. Mais ist.

13. Fahrzeug nach einem der Ansprüche 1-5, dadurch gekennzeichnet, daß das Anbaugerät eine Staubsaugmaschine und der Wechselaufbau ein Staubaufnahmebehälter ist.

14. Fahrzeug nach Anspruch 1, dadurch gekennzeichnet, daß das Fahrzeug Allradantrieb und Allradlenkung hat.

## Claims

1. General purpose tractor, especially for agricultural and forestry purposes, comprising a basic vehicle and a number of attachement devices (4, 5) for different operations, which can be picked up and changed independent from each other, a rear and a front hydraulic system (14, 9) and a rear and a front power take-off shaft (15, 13), a vehicle frame (3) carrying the driver's cabin (2) in the front area, changeable superstructures (5) in the central and rearward area as well front and rear attaching devices (4), and conveyor means (22, 27) arranged underneath the wheel axes (19) of the vehicle and between the wheels (7), characterised by the combination of the following features, which are known per se :

a) the driver's cabin (2) arranged directly at the front end of the vehicle frame (3) is formed so that it allows full sight onto the attaching devices (4) and is rotatably mounted on a rotation plate (50) over an angle of 180,

b) for fastening the superstructures (5) quick release and change systems (17, 18) are provided which are locking means (32, 33, 34, 35) between superstructures and the vehicle frame and which are operable manually or from the driver's seat,

c) wheel axes (19) are arranged as portal axes in order to obtain a high degree of ground clearance,

d) the conveyor means (22, 27) arranged underneath the portal axes (19) are hinged at the vehicle frame (3) or alternatively on the superstructures (5) and thus, are arranged adjustable in a stable and simple manner,

e) the superstructures (5) have legs (38, 39), which in the parked condition are the support legs for the superstructure and which are foldable inwardly with the superstructures (5) being fastenedupon the vehicle frame (3).

2. Tractor according to claim 1, characterised in that the conveyor means (22, 27) underneath the vehicle comprises two conveyors (22 and 27), which are arranged one behind the other, which cooperate, which both extend upwards and rearwards and which are separated from each other by means of a trap.

3. Tractor according to claim 2, characterised in that the first conveyor (22) at its front end is hingedly mounted to an attaching device (4) and at its rear end is adjustably suspended from the machine frame (3), that the second conveyor (27) with its front end is adjustably suspended from the machine frame (3) and with its rear end is hingedly mounted at the superstructure (5) received by the machine frame or at the machine frame (3) or at an attaching device at the rear end, and that the delivery between attaching device or harvesting device and conveyor is obtained by means of an intermediate transmittance device for joining the harvested stream of beets.

4. Tractor according to claim 3, characterised in that the transmittance device is formed as a screening wheel with screw conveyors conveying towards the center.

5. Tractor according to one of claims 1-4, characterised in that the attaching device (4) is a harvesting device for root fruits, corn fruits or spire fruits.

6. Tractor according to one of claims 1-5, characterised in that the attaching device (4) is a snow-plough or a snow-cutter.

7. Tractor according to one of claims 1-6, characterised in that the attaching device (4) is a loading bucket.

8. Tractor according to one of claims 1-5, characterised in that the changeable superstructure (5) is a harvesting bunker with an elevator.

9. Tractor according to one of claims 1-5, characterised in that the changeable superstructure (5) is a seed container and that a seed machine associated to the seed container is received by the rear three-point suspension (14) and is driven by the rear driving shaft (15).

10. Tractor according to one of claims 1-5, characterised in that the changeable superstructure (5) is a spray material container associated with a spraying device, which is supported at the rear three-point suspension (14) and is driven by the rear driving shaft (15).

11. Tractor according to one of claims 1-5, characterised in that the changeable superstructure (5) is a liquid container, f. e. for weed killers, and that the rear three-point suspension (14) receives a spraying device driven by the rear driving shaft (15) or the vehicle hydraulic system.

12. Tractor according to one of claims 1-5, characterised in that the changeable superstructure (5) is a container for chopped harvest fruits, f. e. corn.

13. Tractor according to one of claims 1-5, characterised in that the attaching device is a dust exhauster and the changing superstructure is a dust receiving container.

14. Tractor according to claim 1, characterised in that it has an all-wheel driving and all-wheel steering system.

**Revendications**

1. Tracteur polyvalent, en particulier pour l'agriculture et la sylviculture, avec un véhicule de base et une série de dispositifs montables et démontables (4, 5) pouvant être reçus et changés indépendamment l'un de l'autre pour des opérations différentes, une hydraulique arrière et une hydraulique avant (14, 9) ainsi qu'une prise de force arrière et avant (15, 13), un châssis de véhicule (3) qui reçoit la cabine du conducteur (3) dans la zone avant, des structures ou une carrosserie changeables (5) dans les zones médiane et arrière ainsi que des outils portés avant et arrière (4) et un dispositif de transport (22, 27) disposé en dessous des essieux (19) entre les roues (7), caractérisé par la combinaison des caractéristiques suivantes connues en soi :

a) la cabine du conducteur (2) est montée directement à l'extrémité avant du châssis (3) avec un agencement tel qu'elle permet de voir entièrement les outils portés avant (4) et est montée sur une plaque pivotante (50) de manière à pouvoir tourner de 180° sur le châssis.

b) pour la fixation des structures (5) on prévoit des dispositifs de changement rapide (17, 18) qui permettent des verrouillages (32, 33, 34, 35) réalisables à la main ou à partir de la cabine du conducteur entre les structures et le châssis,

c) les essieux (19) sont réalisés sous forme d'essieux à portique pour l'obtention d'une grande hauteur libre au-dessous du véhicule,

d) les dispositifs de transport (22, 27) disposés au-dessous des essieux à portique (19) sont suspendus au châssis (3) ou aux structures (5) et ainsi disposés de manière stable et facilement réglable,

e) la structure (5) comporte des appuis (38, 39) qui servent comme supports pour la structure changeable lorsqu'elle est déposée et qui sont escamotables lorsque la structure (5) est montée sur le châssis (3).

2. Tracteur selon la revendication 1 caractérisé en ce que le dispositif de transport (22, 27) est constitué, au-dessous du véhicule, de deux convoyeurs (22 et 27) coopérant ensemble et montés en série, qui sont disposés tous les deux ascendants vers l'arrière et séparés l'un de l'autre par une étape de chute.

3. Tracteur selon la revendication 2 caractérisé en ce que le premier convoyeur (22) est articulé à son extrémité avant sur un outil porté (4) et est suspendu de manière réglable avec son extrémité arrière au châssis (3), en ce que le deuxième convoyeur (27) est suspendu de manière réglable avec son extrémité avant au châssis (3) et est articulé à son extrémité arrière sur la structure (5) reçue par le châssis ou sur le châssis (3) ou sur l'outil porté arrière et en ce que la transmission entre l'outil porté ou l'outil de récolte et le dispositif de transport a lieu à l'aide d'un dispositif de transmission monté intermédiairement pour rassembler le flux de betteraves récoltées.

4. Tracteur selon la revendication 3 caractérisé en ce que le dispositif de transmission est agencé sous forme de cylindres à vis à mouvement en sens opposé et convoyant vers le milieu, sous forme d'étoile de tamisage ou d'un dispositif analogue.

5. Tracteur selon l'une des revendications 1 à 4 caractérisé en ce que l'outil porté (4) est un outil de récolte pour des produits végétaux à racine, des produits à grains ou des produits à tige.

6. Tracteur selon l'une des revendications 1 à 5 caractérisé en ce que l'outil porté (4) est un chasse-neige ou un chasse-neige à fraise.

7. Tracteur selon l'une des revendications 1 à 6 caractérisé en ce que l'outil porté (4) est un chargeur frontal.

8. Tracteur selon l'une des revendications 1 à 5 caractérisé en ce que la structure changeable (5) est un silo de produit de récolte à élévateur.

9. Tracteur selon l'une des revendications 1 à 5 caractérisé en ce que la structure changeable (5) est un réservoir à semences et en ce qu'une machine à semer affectée au réservoir à semences est montée sur la tringlerie arrière à trois points (14) et est entraînée par la prise de force arrière (15).

10. Tracteur selon l'une des revendications 1 à 5 caractérisé en ce que la structure changeable (5) est un réservoir pour produit à répandre auquel est associé un dispositif de répandage qui est reçu par la tringlerie arrière à trois points (14) et entraîné par la prise de force arrière (15).

11. Tracteur selon l'une des revendications 1 à 5 caractérisé en ce que la structure changeable (5) est un fût à liquide par exemple pour herbicide et en ce que la tringlerie arrière à trois points (14) reçoit un pulvérisateur qui est commandé par la prise de force arrière (15) ou le dispositif hydraulique du véhicule.

12. Tracteur selon l'une des revendications 1 à 5 caractérisé en ce que la structure changeable (5) est un réservoir pour la réception de produit de récolte haché, par exemple du maïs.

13. Tracteur selon l'une des revendications 1 à 5 caractérisé en ce que l'outil porté est une machine à aspirer la poussière et en ce que la structure changeable est un réservoir destiné à recevoir la poussière.

14. Tracteur selon la revendication 1 caractérisé en ce que le véhicule est à traction toutes roues et à toutes roues directrices.

Fig. 1

Fig. 2

Fig. 3

Fig. 4

Fig. 5

Fig. 6

Fig. 7

Fig. 8

Fig. 9